# EUROPÄISCHE PATENTSCHRIFT

(11) **EP 2 634 439 B1**
(45) Veröffentlichungstag und Bekanntmachung des Hinweises auf die Patenterteilung: **10.08.2016**
(21) Anmeldenummer: 13156653.1
(22) Anmeldetag: 25.02.2013
(51) Int. Cl.: F16B 13/14

(54) **Siebhülse für einen Dübel**
Perforated sleeve for a dowel
Douille perforée pour une cheville

(30) Priorität: 03.03.2012 DE 102012203359
(43) Veröffentlichungstag der Anmeldung: 04.09.2013
(73) Patentinhaber: MKT Metall-Kunststoff-Technik GmbH & Co. KG, 67685 Weilerbach (DE)
(72) Erfinder: Kerl, Gregor, 74676 Niedernhall (DE)
(74) Vertreter: Patentanwälte Ruff, Wilhelm, Beier, Dauster & Partner mbB

(56) Entgegenhaltungen:
- EP-A1- 1 367 267
- EP-A2- 2 072 838
- DE-A1- 2 005 467
- DE-A1- 3 535 251
- DE-A1- 10 143 866
- DE-U1-202007 009 225

## Beschreibung

Die Erfindung betrifft eine Siebhülse für Dübel. Siebhülsen dieser Art dienen dazu, eine aushärtende Masse aufzunehmen, in die ein metallisches Befestigungselement eingedrückt wird. Dabei wird die Masse durch die Öffnungen der Siebhülse nach außen verdrängt, so dass nach dem Aushärten eine feste Verbindung mit der Wand des Bohrlochs gebildet wird.

Es ist bereits eine Siebhülse zur Aufnahme von mittels aushärtender Massen befestigbaren Verankerungselementen bekannt (EP 0 172 134 A1). Die Siebhülse besteht aus Drahtgewebe.

Es ist ebenfalls bekannt, solche aus Drahtgeflecht bestehenden Siebhülsen zur Verlängerung zusammenzustecken (DE 35 35 251 A1).

Weiterhin ist es bekannt, Siebhülsen aus einem Kunststoffgitter herzustellen, in das eine Hülse aus Drahtgeflecht eingesteckt wird- Dabei kann am äußeren Ende der Siebhülse ein Trichfierelement angeordnet sein, das für eine Zentrierung des metallischen Befestigungselements dient (US 2004/0250497 A1).

Außerdem ist eine Siebhülse bekannt, die aus einem Kunststoffschlauch größerer Länge besteht, der abgetrennt und mit Endteilen versehen werden kann (DE 10 2006 058182 A1).

Ebenfalls bekannt ist ein hülsenförmiges Dübelelement, das an seinem einen Ende ein Abschlusselement und an seinem anderen Ende ein mit einem unter bestimmten Umständen einen Boden bildenden Zentrierelement versehenes Abschlusselement aufweist. Der Boden ist einstückig mit dem Abschlusselement verbunden und kann nicht von ihm getrennt werden. An dem anderen Ende kann ein Kragen angebracht werden (EP 1 367 267 A1).

Der Erfindung liegt die Aufgabe zu Grunde, eine für eine große Zahl von Anwendungsfällen, insbesondere unterschiedliche Bohrlochtiefen, anwendbare Siebhülse zur Bildung von Befestigungen zu schaffen.

Zur Lösung dieser Aufgabe schlägt die Erfindung eine Siebhülse mit den im Anspruch 1 genannten Merkmalen vor. Weiterbildungen der Erfindung sind Gegenstand von Unteransprüchen.

Der an dem äußeren Ende des Hülsenelements angeordnete Kragen verhindert, dass die Siebhülse zu weit in ein Bohrloch eingeschoben wird. Der am anderen Ende der Siebhülse vorhandene Boden bildet einen Abschluss, so dass der eingeführte aushärtende Stoff nur durch die Mantelfläche der Hülse nach außen tritt.

In Fällen, in denen beispielsweise aus bestimmten Gründen ein Kragen nicht gewünscht wird, kann dieser mittels der Solltrennstelle einfach abgerissen werden. Die Dübelhülse ist also vielseitiger verwendbar.

In Weiterbildung der Erfindung ist vorgesehen, dass die Siebhülse einstückig aus Kunststoff gespritzt ist. Das Maschengeflecht ist somit einstückig mit der Siebhülse gespritzt. Dabei lassen sich Solltrennstellen sowohl für den Kragen als auch für den Boden leicht verwirklichen.

Bei dem Maschengeflecht spielt die Größe der Öffnungen im Verhältnis zu dem Maschenmaterial eine gewisse Rolle, da der durch die Maschen austretende aushärtende Stoff durch die die Maschen bildenden Fäden geschwächt wird. Um nun trotz eines Maschengeflechts mit großem Öffnungsverhältnis dennoch eine beim Einschieben der Siebhülse ausreichende Festigkeit der Siebhülse auch bei unsachgemäßer Behandlung sicherzustellen, kann erfindungsgemäß in Weiterbildung vorgesehen sein, dass das Hülsenelement mehrere in Längsrichtung verlaufende Stege aufweist, beispielsweise an vier um den Umfang verteilten Stellen. Diese erhöhen die Stabilität, ohne das Maschengeflecht mechanisch zu stark beanspruchen.

Erfindungsgemäß kann in Weiterbildung der Erfindung vorgesehen sein, dass das Hülsenelement mindestens einen mit äußeren Zähnen versehenen Steg aufweist, der zusätzlich eine mechanische Verankerung der Siebhülse bewirken kann.

Erfindungsgemäß kann vorgesehen sein, dass das Maschengeflecht durch in Axialrichtung der Hülse verlaufende Längsfäden und senkrecht dazu verlaufende Querfäden gebildet ist.

Erfindungsgemäß kann in Weiterbildung vorgesehen sein, dass das äußere Abschlusselement, also das Abschlusselement, an dem der Kragen angebracht ist, zur Verbindung mit einem vorderen Abschlusselement einer benachbarten identisch oder mindestens im Endbereich identisch ausgebildeten Siebhülse ausgebildet ist. Auf diese Weise wird es möglich, zwei identisch oder ähnlich ausgebildete Siebhülsen zur Bildung einer längeren Siebhülse miteinander zu verbinden.

Als besonders sinnvoll hat sich eine Steckverbindung herausgestellt, bei der die beiden Hülsen einfach zusammengesteckt werden.

Erfindungsgemäß kann vorgesehen sein, dass die Verbindungseinrichtung zwischen der Siebhülse und einer benachbarten Siebhülse derart ausgebildet ist, dass die Verbindung auch bei nicht abgetrennten Kragen möglich ist. Es ist denkbar, dass eine solche Verbindung sinnvoll ist, wenn beispielsweise eine Platte an einer Wand befestigt werden und der Kragen an der Wand anliegen sotl.

Insbesondere kann vorgesehen sein, dass bei der Steckverbindung ein Abschlusselement in das andere hineingesteckt wird, also einen Außendurchmesser aufweist, der mindestens angenähert dem Innendurchmesser des anderen Abschlusselements entspricht. Da durch das den Kragen aufweisende Ende der Mörtel in das Innere des Siebhülse eingespritzt wird und die Siebhülse auch allein verwendet werden kann, kann erfindungsgemäß vorgesehen sein, dass der Außendurchmesser des vorderen Abschlusselements, also des Abschlusselements, das den Boden enthält, dem Innendurchmesser des dem Kragen zugeordneten Abschlusselements entspricht. Mit anderen Worten wird die vordere Siebhülse in die hintere Siebhülse eingesteckt.

Da in zusammengesetztem Zustand beim Injizieren des aushärtenden Materials auf die tiefer im Bohrloch steckende Siebhülse einer zusammengesetzten Siebhülse eine Kraft in Axialrichtung ausgeübt wird, kann erfindungsgemäß in Weiterbildung eine Sicherungseinrichtung gegen ein Lösen der Verbindungseinrichtung zwischen den beiden Siebhülsen vorgesehen sein.

Als besonders sinnvoll hat sich herausgestellt, dass ein Abschlusselement zahnartige Vorsprünge und das jeweils andere Abschlusselement den Vorsprüngen entsprechende Durchbrechungen, insbesondere Fenster, aufweisen kann. Sinnvollerweise sind die Vorsprünge an der Außenseite des Abschlusselements mit dem kleineren Durchmesser ausgebildet.

Beim Verbinden zweier Siebhülsen zu einer größeren Siebhülse ist es notwendig, den Boden der äußeren Dübelhülse vorher abzureißen. Dies wird durch die Solltrennstelle zwischen dem Abschlusselement und dem Boden ermöglicht. Um diese Abtrennung zu erleichtern, kann erfindungsgemäß in Weiterbildung vorgesehen sein, dass an dem Boden eine Abreißlasche angeformt ist. Man braucht dann zum Abreißen kein Werkzeug.
An dem gegenüberliegenden Ende ist eine solche Anfasslasche nicht erforderlich, da dort der Kragen, der ja möglicherweise abgetrennt werden soll, selbst über die Siebhülse radial vorsteht, so dass man den Kragen selbst anfassen kann.
Siebhülsen dieser Art dienen nach dem Injizieren des aushärtenden Mörtels zum Einschieben eines metallischen Befestigungselements, beispielsweise einer Gewindestange. Damit diese Gewindestange möglichst in der Mitte der Siebhülse verläuft, kann erfindungsgemäß eine Zentrierkappe vorgesehen sein, die insbesondere in dem Abschlusselement angeordnet ist, an dem auch der Kragen angebracht ist, also an dem äußeren Ende der Siebhülse.
Dabei kann erfindungsgemäß in Weiterbildung vorgesehen sein, dass beim Abreißen des Kragens von dem Abschlusselement die Zentrierkappe unverändert in dem Abschlusselement bleibt. Wenn zwei Siebhülsen miteinander verbunden werden, erfolgt also eine Zentrierung in den Eingangsbereichen beider Teile der zusammengesetzten Siebhülse.

Eine zur Verlängerung vorgesehene Siebhülse ist so ausgebildet, dass sie keinen Boden aufweist.

Es gibt Anwendungsfälle, wo an einer Wand eine Schicht aus leichtem Material befestigt werden soll. Der Dübel soll nur in der Wand angebracht werden, aber durch die Schicht des leichteren Materials hindurch geführt sein, da beispielsweise der Kopf des Befestigungselements an der Außenseite dieser Schicht angeordnet sein muss. Wenn man in diesem Fall eine lange Siebhülse verwendet, so tritt das aushärtende Material auch im Bereich der zu befestigenden Schicht aus, die aber nicht so fest ist wie das Mauerwerk.. Um nun zu gewährleisten, dass der Mörtel nur in der Wand austritt, ist erfindungsgemäß eine Abstandshülse vorgesehen, die sich in der gleichen Weise mit der Siebhülse verbinden lässt wie eine richtige Siebhülse. Diese Abstandshülse hat jedoch kein Maschengeflecht, sondern ist geschlossen.

Erfindungsgemäß kann in Weiterbildung vorgesehen sein, dass das bodenseitige Abschlusselement dann, wenn der Boden abgetrennt ist, eine Innenöffnung bildet, die vorzugsweise kreisförmig ausgebildet ist.

In nochmaliger Weiterbildung kann vorgesehen sein, dass diese Innenöffnung mindestens zwei radial nach innen verlaufende Vorsprünge aufweist, die insbesondere gleichen Winkelabstand voneinander aufinreisen. Diese dienen der Zentrierung des Verankerungselements und bilden einen Ringspalt, durch den der Mörtel auch zurückfließen kann. Dies ist selbst dann möglich, wenn das Verankerungselement eingebracht ist oder wird, da der Mörtel durch den Ringspalt zwischen dem Rand der Öffnung und dem Verankerungselement fließen kann.

Die Erfindung schafft somit auch einen Bausatz aus Siebhülsen, Verlängerungshülsen und Abstandshülsen. Mit diesen verschiedenen Teilen lassen sich Abstandshülsen für die unterschiedlichsten Anwendungsfälle kombinieren.

Zur Bildung eines Dübels schlägt die Erfindung folgendes Verfahren vor.
- Bei einer Siebhülse wird der Boden abgerissen.
- Bei einer zweiten Siebhülse wird der Kragen abgerissen.
- Die Siebhülse ohne Boden wird in das vordere ehemals den Kragen enthaltende Ende der zweiten Siebhülse eingesteckt, um dadurch eine zusammengesetzte Siebhülse zu bilden.
- Die zusammengesetzte Siebhülse wird in ein Dübelloch eingeschoben, bis der Kragen an der Oberfläche am Rand des Bohrlochs anliegt.
- In die zusammengesetzte Siebhülse wird der Mörtel eingebracht, beispielsweise mithilfe eines Zwangsmischers.
- In die zusammengesetzte Siebhülse wird vor dem Aushärten des Mörtels das Verankerungsmittel eingeschoben.
- Das Aushärten des Mörtels wird abgewartet.

Das Ineinandersstecken der Siebhülsen ist nur dann möglich, wenn von der weiter außen im Bohrloch anzuordnenden Siebhülse der Boden entfernt wird. Dies ist auch erforderlich, da sonst der Mörtel nicht in die tiefere Siebhülse gelangen und das Verankerungselement nicht eingeschoben werden kann.

Durch die nach Abtrennen des Bodens gebildete Innenöffnung ist es möglich, dass der Mörtel von einer Siebhülse in eine benachbarte Siebhülse fließen kann. Das Einbringen des Mörtels geschieht beispielsweise mit einem Zwangsmischer. Wenn der Mörtel durch die Innenöffnung fließen kann, werden alle Hülsen vorzugsweise gleichmäßig gefüllt.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Siebhülse nach der Erfindung;
- Figur 2: eine perspektivische Darstellung der Siebhülse der Figur 1;
- Figur 3: eine Stirnansicht der Siebhülse von oben in Figur 1 und Figur 2;
- Figur 4: eine Seitenansicht einer Siebhülse nach Entfernen des Bodens;
- Figur 5: die perspektivische Ansicht der Siebhülse der Figur 4;
- Figur 6: die Stirnansicht der Siebhülse der Figur 4 in Figur 5 von oben;
- Figur 7: eine Seitenansicht einer längeren Siebhülse;
- Figur 8: die perspektivische Ansicht der Siebhülse der Figur 7;
- Figur 9: eine Stirnansicht der Siebhülse der Figur 7 und 8 von oben;
- Figur 10: die Seitenansicht der Siebhülse der Figur 7 nach Entfernen des Kragens;
- Figur 11: die perspektivische Ansicht der Siebhülse der Figur 10;
- Figur 12: die Stirnansicht der Siebhülsen der Figur 10 und 11 von oben;
- Figur 13: die Seitenansicht zweier zusammengesteckter Siebhülsen;
- Figur 14: einen Axialschnitt durch die zusammengesetzte Siebhülse der Figur 13.

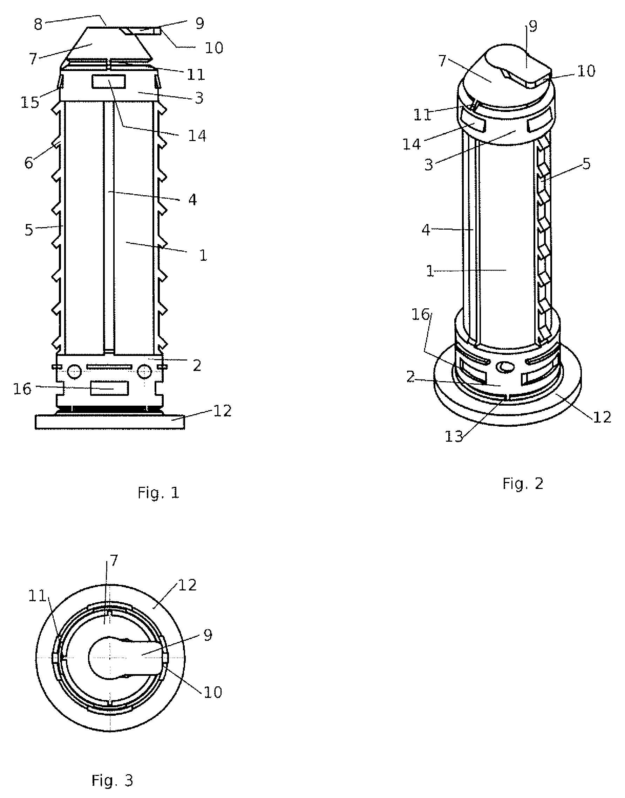

Die Figur 1 zeigt die Seitenansicht einer von der Erfindung vorgeschlagene Siebhülse. Die Siebhülse enthält ein Hülsenelement 1, das ein Maschengeflecht aufweist, das durch Längsfäden und Querfäden gebildete Öffnungen aufweist. In der Darstellung der Figuren lässt sich dies in dem Maßstab nicht darstellen. Es wird daher nur beschrieben. Es wird der Einfachheit halber auf die in der Beschreibungseinleitung genannten Dokumente verwiesen, in denen solche Maschengeflechte dargestellt und beschrieben sind.

An dem in Figur 1 unteren Ende der Siebhülse 1 ist ein Abschlusselement 2 ausgebildet, das kein Maschengeflecht bildet. Es handelt sich um einen Ring mit einer Wandstärke, die deutlich größer ist als die Wandstärke des Maschengeflechts.

An dem gegenüberliegenden Ende der Siebhülse 1 ist ein vorderes Abschlusselement 3 ausgebildet, bei dem es sich ebenfalls um ein Ringelement mit einer vergrößerten Wandstärke handelt. Das in Figur 1 und Figur 2 obere Ende der Siebhülse ist beim Einschieben der Siebhülse in ein Dübelloch das vordere Ende, das also tiefer in dem Bohrloch angeordnet ist als das äußere Ende.

Zwischen den beiden Abschlusselementen 2, 3 verlaufen im dargestellten Beispiel vier Längsstege 4, 5, die eine Versteifung der Siebhülse bewirken. Die beiden in Figur 1 äußeren Stege 5 sind mit schrägen Zähnen 6 versehen. Die Zähne 6 sind so orientiert, dass sie das Einschieben der Siebhülse in ein Bohrloch erleichtern, das Herausziehen aber erschweren.

An dem vorderen Abschlusselement 3 ist ein Boden 7 angeformt. Dieser Boden weist mindestens in seinem Randbereich Kegelform auf und endet in einer ebenen Vorderfront 8. An dieser ebenen Vorderfront 8 ist eine seitliche Abreißlasche 9 angeformt. Diese steht radial über, und ihre freie Stirnkante 10 befindet sich etwa auf dem Außendurchmesser der Siebhülse 1. Der Boden 7 ist mithilfe dreier Solltrennstellen 11 an dem Abschlusselement 3 angeformt.

An dem gegenüberliegenden äußeren Ende der Dübelhülse 1 ist an dem Abschlusselement 2 ein Kragen 12 angeformt, der die Form einer ebenen Ringscheibe aufweist. Auch dieser Kragen 12 ist mithilfe von Solltrennstellen 13 mit dem Abschlusselement 2 verbunden. Eine Solltrennstelle 13 ist in Figur 2 unten zu sehen.

An der Außenseite des vorderen Abschlusselements 3 sind über den Umfang verteilt vier Vorsprünge 14 ausgebildet, die die Querschnittsform eines Sägezahns aufweisen. Sie gehen in Richtung zum Boden 7 in den Umfang des Abschlusselements 3 über und bilden auf der dem äußeren Abschlusselement 2 zugewandten Seite eine quer zur Längsachse verlaufende Schulter 15. Die Breite aller Vorsprünge 14 in Umfangsrichtung ist gleich.

Das äußere Abschlusselement 2 weist vier Durchbrechungen 16 auf, deren Abmessungen den Abmessungen der Vorsprünge 14 gleich sind.

Der Außendurchmesser des vorderen die Vorsprünge 14 aufweisenden Abschlusselements 3 entspricht dem in Figur 1 nicht zu sehenden Innendurchmesser des äußeren Abschlusselements 2.

Die Stirnansicht der Figur 3 zeigt nochmals die an dem Boden 7 angeformte seitlich herausragende Abreißlasche 9. Im Zusammenhang mit Figur 1 kann man erkennen, dass an der Umfangsstelle, wo die Abreißlasche 9 angeformt ist, keine Verbindung zwischen dem Boden und dem Abschlusselement 3 vorhanden ist. Die Solltrennstellen 11 sind an der gegenüberliegenden Umfangsstelle und an den Seiten.

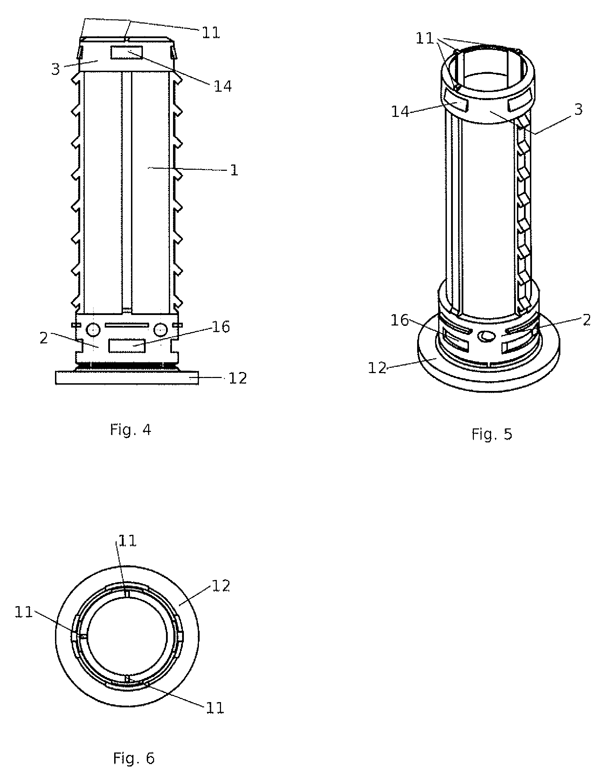

Die jetzt folgenden Figuren 4, 5 und 6 zeigen die Siebhülse nach Abreißen des Bodens 7. Man kann insbesondere der Figur 5 und 6 entnehmen, dass die Reste der Solltrennstellen 11 nur über den halben Umfang verteilt sind und dass an der Stelle, wo die Abreißlasche 9 nach außen ragt, keine Solltrennstellen vorhanden ist. Dort gibt es keine Verbindung zwischen dem Boden 7 und dem Abschlusselement 2.

Erfindungsgemäß kann auch eine Siebhülse vorgesehen sein, die von vornherein so aussieht wie die Siebhülse in den Figuren 4 bis 6, die also von sich aus keinen Boden aufweist.

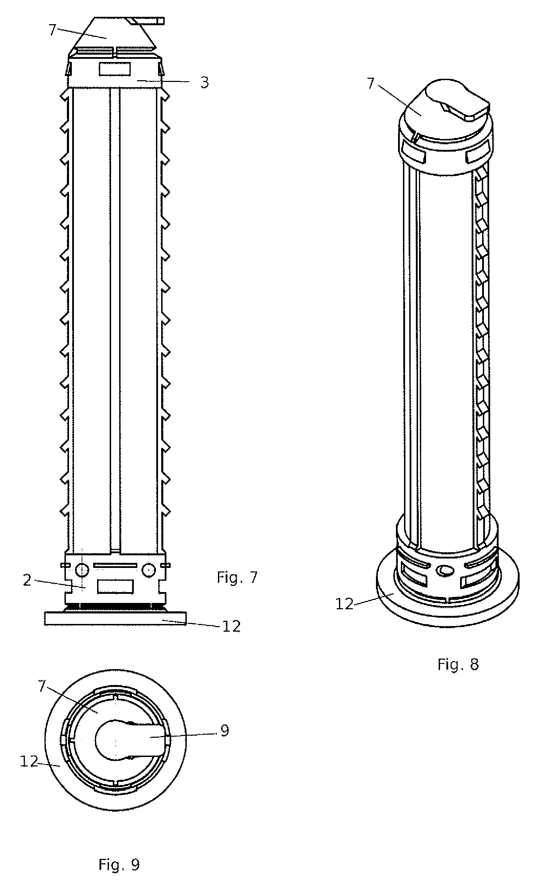

Die folgende Figur 7 zeigt eine Siebhülse, die deutlich länger ist als die in den vorherigen Figuren dargestellte Siebhülse. Sie ist aber in ihren beiden Endbereichen identisch mit der vorherigen Ausführungsform aufgebaut. Der Unterschied liegt in der Länge des Maschengeflechts zwischen den beiden Abschlusselementen 3, 2 und natürlich in der Länge der Stege 4, 5.

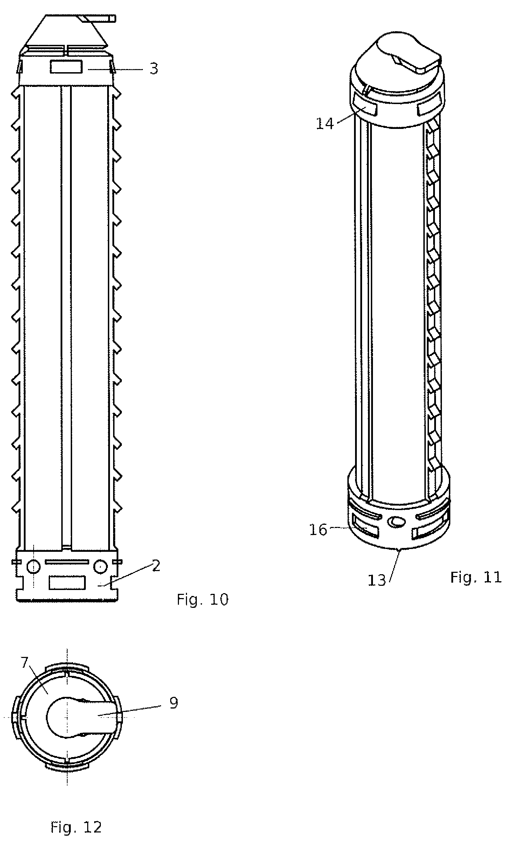

Während die Figuren 4 bis 6 eine Siebhülse mit abgerissenem Boden zeigen, zeigen jetzt die Figuren 10 bis 12 den Zustand der Siebhülse der Figuren 7 bis 9 nach Abreißen des vorderen Kragens 12. Der Rest einer Solltrennstelle 13 ist in Figur 11 unten noch zu sehen.

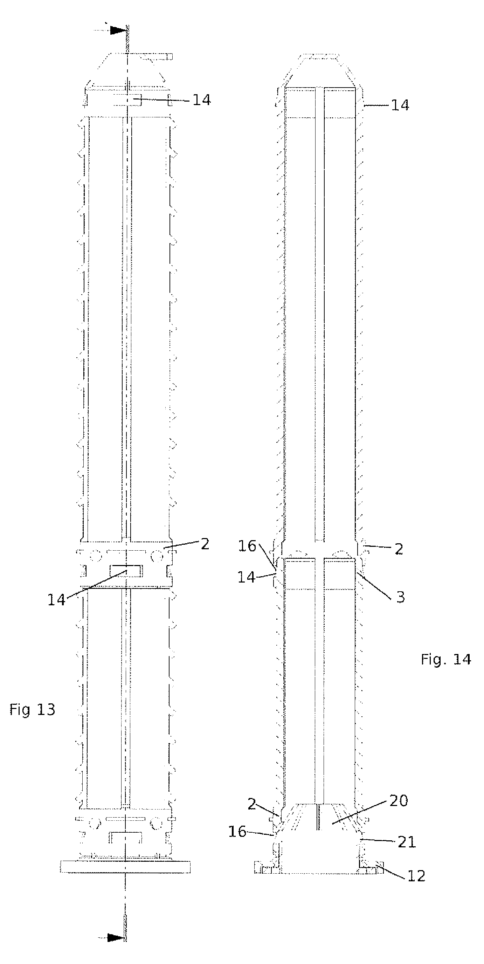

Die Figur 13 zeigt die Seitenansicht einer zusammengesetzten Siebhülse, die dadurch entstanden ist, dass eine längere Siebhülse ohne den äußeren Kragen 12, siehe Figur 10, mit einer kürzeren Siebhülse ohne Boden, siehe Figur 4, zusammengesetzt ist. Die Verbindung geschieht einfach dadurch, dass das vordere Abschlusselement 3 der kürzeren Siebhülse in das äußere Abschlusselement 2 der längeren Siebhülse eingesteckt wird. Dabei kommen die Vorsprünge 14 des vorderen Abschlusselements in die Durchbrechungen 16 des äußeren Abschlusselements 2 zu liegen.

Die Figur 14 zeigt nun einen Längsschnitt durch die Anordnung der Figur 13 in einer senkrecht zur Papierebene verlaufenden Ebene. Es ist hier zu sehen, dass das vordere Abschlusselement 3 in das äußere Abschlusselement 2 der anderen Siebhülse eingeschoben ist, was aufgrund der Durchmesserunterschiede möglich ist. Die Vorsprünge 14 greifen in die Durchbrechungen 16 ein. Dadurch ist ein Auseinanderziehen der beiden Teile der zusammengesetzten Siebhülse verhindert.

In dem äußeren Abschlusselement 2 der kürzeren Siebhülse ist eine Zentrierkappe 20 angeordnet, die als getrenntes Bauteil hergestellt ist und ähnlich wie das vordere Abschlusselement 3 ausgebildet ist, so dass sie in das äußere Abschlusselement 2 eingeschoben werden kann und dort mit Vorsprüngen 21 in den Durchbrechungen 16 festgelegt wird.

## Patentansprüche

1. Siebhülse für einen Dübel, mit
1.1 einem Hülsenelement (1) mit einem Maschengeflecht,
1.2 je einem Abschlusselement (2, 3) an jedem Ende des Hülsenelements (1),
1.3 einem an dem einen Ende des Hülsenelements (1) angeordneten Kragen (12), der
1.4 über mindestens eine das Abreißen des Kragens (12) von dem Abschlusselement (2) ermöglichende Solltrennstelle (13) mit dem Abschlusselement (2) verbunden ist, sowie mit
1.5 einem an dem jeweils anderen Ende des Hülsenelements (1) angeordneten Boden (7), der
1.6 über mindestens eine das Abreißen des Bodens (7) von dem Abschlusselement (3) ermöglichende Solltrennstelle (11) mit dem Abschlusselement (3) verbunden ist, wobei
1.7 die Siebhülse einstückig aus Kunststoff gespritzt ist.

2. Siebhülse nach Anspruch 1, bei der das Hülsenelement (1) mehrere in Längsrichtung verlaufende Stege (4, 5) aufweist, wobei gegebenenfalls mindestens ein Steg (5) eine Zahnreihe aufweist.

3. Siebhülse nach Anspruch 1 oder 2, bei der das Maschengeflecht durch Längsfäden und Querfäden gebildet ist.

4. Siebhülse nach einem der vorhergehenden Ansprüche, bei der das dem Kragen (12) zugeordnete Abschlusselement (2) zur Verbindung, insbesondere Steckverbindung, mit einem dem Boden (7) zugeordneten Abschlusselement (3) einer identisch oder ähnlich aufgebauten Siebhülse ausgebildet ist.

5. Siebhülse nach einem der vorhergehenden Ansprüche, bei der die Verbindungseinrichtung zwischen der Siebhülse und einer benachbarten Siebhülse derart ausgebildet ist, dass die Verbindung auch bei nicht abgetrenntem Kragen (12) möglich ist.

6. Siebhülse nach Anspruch 4 oder 5, bei der der Außendurchmesser des dem Boden (7) zugeordneten Abschlusselements (3) dem Innendurchmesser des dem Kragen (12) zugeordneten Abschlusselements (2) entspricht.

7. Siebhülse nach einem der Ansprüche 4 bis 6, bei der ein Abschlusselement (3) zahnartige Vorsprünge (14) und das andere Abschlusselement (2) den Vorsprüngen (14) entsprechende Durchbrechungen (16), insbesondere Fenster, aufweist.

8. Siebhülse nach einem der vorhergehenden Ansprüche, bei der der Boden (7) mindestens teilweise konisch ausgebildet ist.

9. Siebhülse nach einem der vorhergehenden Ansprüche, mit einer an dem Boden (7) angeformten Abreißlasche (9).

10. Siebhülse nach einem der vorhergehenden Ansprüche, mit einer Zentrierkappe (20), die vorzugsweise in dem dem Kragen (12) zugeordneten Abschlusselement (2) oder dem Kragen (12) angeordnet ist.

11. Siebhülse nach einem der vorhergehenden Ansprüche, bei der das bodenseitige Abschlusselement (3) eine insbesondere kreisförmige Innenöffnung bildet, wenn der Boden (7) von dem Abschlusselement (3) abgetrennt ist.

12. Siebhülse nach Anspruch 11, bei der die Innenöffnung mindestens zwei radial nach innen verlaufende Vorsprünge aufweist, die insbesondere gleichmäßig über den Umfang verteilt angeordnet sind.

13. Verlängerungshülse für eine Siebhülse nach einem der vorhergehenden Ansprüche, mit
13.1 einem Hülsenelement (1) mit einem Maschengeflecht,
13.2 je einem Abschlusselement (2, 3) an jedem Ende des Hülsenelements (1),
13.3 einem an dem einen Ende des Hülsenelements (1) angeordneten Kragen (12), der gegebenenfalls
13.4 über mindestens eine das Abreißen des Kragens (12) von dem Abschlusselement (2) ermöglichende Solltrennstelle (13) mit dem Abschlusselement (2) verbunden ist, wobei
13.5 die Verlängerungshülse einstückig aus Kunststoff gespritzt ist und wobei
13.6 die Verlängerungshülse keinen Boden aufweist.

14. Abstandshülse für eine Siebhülse bzw. Verlängerungshülse nach einem der vorhergehenden Ansprüche, mit
14.1 einem Hülsenelement ohne Maschengeflecht,
14.2 je einem Abschlusselement (2, 3) an jedem Ende des Hülsenelements (1),
14.3 einem an dem der Siebhülse bzw. der Verlängerungshülse abgewandten äußeren Ende des Hülsenelements (1) angeordneten Kragen (12), der gegebenenfalls
14.4 über mindestens eine das Abreißen des Kragens (12) von dem Abschlusselement (2) ermöglichende Solltrennstelle (13) mit dem Abschlusselement (2) verbunden ist.

## Claims

1. A perforated sleeve for a wall plug, with
1.1 a sleeve element (1), with a mesh structure,
1.2 a terminal element (2, 3) at each end of the sleeve element (1),
1.3 a collar (12) arranged at the one end of the sleeve element (1), which
1.4 is connected with the terminal element (2) via at least one predetermined separating station (13), enabling the collar (12) to be torn from the terminal element (2), together with
1.5 a base (7) arranged at the other end of the sleeve element (1), which
1.6 is connected with the terminal element (3) via at least one predetermined separating station (11), enabling the base (7) to be torn from the terminal element (3), wherein
1.7 the perforated sleeve is injection moulded in one piece out of plastic.

2. The perforated sleeve in accordance with claim 1, in which the sleeve element (1) has a plurality of webs (4, 5) running in the longitudinal direction, wherein at least one web (5) has a row of teeth as required.

3. The perforated sleeve in accordance with claim 1 or 2, in which the mesh structure is formed by means of longitudinal threads and transverse threads.

4. The perforated sleeve in accordance with one of the preceding claims, in which the terminal element (2) associated with the collar (12), is designed for purposes of connection, in particular plug-in connection, with a terminal element (3) associated with the base (7) of an identically, or similarly, constructed perforated sleeve.

5. The perforated sleeve in accordance with one of the preceding claims, in which the connecting device between the perforated sleeve and an adjacent perforated sleeve is designed such that connection is also possible in the case of a collar (12) that has not been detached.

6. The perforated sleeve in accordance with claim 4 or 5, in which the outer diameter of the terminal element (3) associated with the base (7) corresponds to the inner diameter of the terminal element (2) associated with the collar (12).

7. The perforated sleeve in accordance with one of the claims 4 to 6, in which a terminal element (3) has teeth-like projections (14) and the other terminal element (2) has openings (16), in particular windows, corresponding to the projections (14).

8. The perforated sleeve in accordance with one of the preceding claims, in which the base (7) is designed so as to be at least partially conical.

9. The perforated sleeve in accordance with one of the preceding claims, with a tear-off tab (9) moulded onto the base (7).

10. The perforated sleeve in accordance with one of the preceding claims, with a centring cap (20), which is preferably arranged in the terminal element (2) associated with the collar (12), or in the collar (12).

11. The perforated sleeve in accordance with one of the preceding claims, in which the base-side terminal element (3) forms an in particular circular inner opening, if the base (7) is detached from the terminal element (3).

12. The perforated sleeve in accordance with claim 11, in which the inner opening has at least two projections running radially inward, which in particular are arranged evenly distributed over the periphery.

13. An extension sleeve for a perforated sleeve in accordance with one of the preceding claims, with
13.1 a sleeve element (1), with a mesh structure,
13.2 a terminal element (2, 3) at each end of the sleeve element (1),
13.3 a collar (12) arranged at the one end of the sleeve element (1), which, as required
13.4 is connected with the terminal element (2) via at least one design separating station (13), enabling the collar (12) to be torn from the terminal element (2), wherein
13.5 the extension sleeve is injection moulded in one piece out of plastic, and wherein
13.6 the extension sleeve does not have a base.

14. A spacer sleeve for a perforated sleeve, or an extension sleeve, in accordance with one of the preceding claims, with
14.1 a sleeve element without a mesh structure,
14.2 a terminal element (2, 3) at each end of the sleeve element (1),
14.3 a collar (12) arranged on the outer end of the sleeve element (1), facing away from the perforated sleeve or the extension sleeve, which, as required
14.4 is connected with the terminal element (2) via at least one predetermined separating station (13), enabling the collar (12) to be torn from the terminal element (2).

## Revendications

1. Douille treillis pour une cheville, avec
1.1 un élément formant douille (1) avec une structure en treillis,
1.2 chaque fois un élément de terminaison (2, 3) sur chaque extrémité de l'élément formant douille (1),
1.3 un collet (12) placé sur l'une des extrémités de l'élément formant douille (1) qui
1.4 par l'intermédiaire d'au moins une zone de rupture préférentielle (13) permettant d'arracher le collet (12) de l'élément de terminaison (2) est relié avec l'élément de terminaison (2), ainsi qu'avec
1.5 un fond (7) placé sur l'autre extrémité respective de l'élément formant douille (1) qui
1.6 par l'intermédiaire d'au moins une zone de rupture préférentielle (11) permettant d'arracher le fond (7) de l'élément de terminaison (3) est relié avec l'élément de terminaison (3),
1.7 la douille treillis étant injectée en monobloc en matière plastique.

2. Douille treillis selon la revendication 1, sur laquelle l'élément formant douille (1) comporte plusieurs listels (4, 5) s'écoulant en direction longitudinale, le cas échéant au moins un listel (5) comportant une rangée de dents.

3. Douille treillis selon la revendication 1 ou la revendication 2, sur laquelle la structure en treillis est formée par des fils longitudinaux et des fils transversaux.

4. Douille treillis selon l'une quelconque des revendications précédentes, sur laquelle l'élément de terminaison (2) associé au collet (12) est conçu pour la liaison, notamment pour la liaison par enfichage avec un élément de terminaison (3) associé au fond (7) d'une douille treillis de structure analogue ou identique.

5. Douille treillis selon l'une quelconque des revendications précédentes, sur laquelle le système de liaison entre la douille treillis et une douille treillis voisine est conçu de telle sorte que la liaison soit aussi possible lorsque le collet (12) n'est pas sectionné.

6. Douille treillis selon la revendication 4 ou la revendication 5, sur laquelle le diamètre extérieur de l'élément de terminaison (3) associé au fond (7) correspond au diamètre intérieur de l'élément de terminaison (2) associé au collet (12).

7. Douille treillis selon l'une quelconque des revendications 4 à 6, sur laquelle l'élément de terminaison (3) comporte des saillies (14) en forme de dents et l'autre élément de terminaison (2) comporte des passages (16) correspondant aux saillies (14), notamment des fenêtres.

8. Douille treillis selon l'une quelconque des revendications précédentes, sur laquelle le fond (7) est conçu au moins en partie sous forme conique.

9. Douille treillis selon l'une quelconque des revendications précédentes, avec une patte à arracher (9) rapportée sur le fond (7).

10. Douille treillis selon l'une quelconque des revendications précédentes avec un capuchon de centrage (20) qui est placé de préférence dans l'élément de terminaison (2) associé au collet (12) ou dans le collet (12).

11. Douille treillis selon l'une quelconque des revendications précédentes, sur laquelle l'élément de terminaison (3) du côté du fond forme un orifice intérieur notamment circulaire lorsque le fond (7) est sectionné de l'élément de terminaison (3).

12. Douille treillis selon la revendication 11 sur laquelle l'orifice intérieur comporte aux moins deux saillies s'écoulant en direction radiale vers l'intérieur qui sont placées en étant distribuées notamment de manière régulière sur la circonférence.

13. Douille de rallonge pour une douille treillis selon l'une quelconque des revendications précédentes, avec
13.1 un élément formant douille (1) avec une structure en treillis,
13.2 chaque fois un élément de terminaison (2, 3) sur chaque extrémité de l'élément formant douille (1)
13.3 un collet (12) placé sur l'une des extrémités de l'élément formant douille (1) qui le cas échéant,
13.4 par l'intermédiaire d'au moins une zone de rupture préférentielle (13) permettant d'arracher le collet (12) de l'élément de terminaison (2) est relié avec l'élément de terminaison (2),
13.5 la douille de rallonge étant injectée en monobloc en matière plastique et
13.6 la douille de rallonge ne comportant pas de fond.

14. Douille d'écartement pour une douille treillis ou une douille de rallonge selon l'une quelconque des revendications précédentes, avec
14.1 un élément formant douille sans structure en treillis,
14.2 chaque fois un élément de terminaison (2, 3) sur chaque extrémité de l'élément formant douille (1),
14.3 un collet (12) placé sur l'extrémité extérieure de l'élément formant douille (1) qui est opposée à la douille treillis ou à la douille de rallonge qui le cas échéant
14.4 est relié par l'intermédiaire d'au moins une zone de rupture préférentielle (13) permettant l'arrachement du collet (12) de l'élément de terminaison (2) avec l'élément de terminaison (2).
